Europäisches Patentamt

European Patent Office

Office européen des brevets

(11) Publication number: **0 196 183**
**B1**

## (12) EUROPEAN PATENT SPECIFICATION

(45) Date of publication of patent specification: **20.12.89**

(51) Int. Cl.⁴: **F 02 B 37/12, F 01 D 17/14**

(21) Application number: **86301860.2**

(22) Date of filing: **14.03.86**

(54) Turbo-supercharger for an internal combustion engine.

(30) Priority: **19.03.85 JP 56341/85**

(43) Date of publication of application:
**01.10.86 Bulletin 86/40**

(45) Publication of the grant of the patent:
**20.12.89 Bulletin 89/51**

(84) Designated Contracting States:
**DE FR GB**

(56) References cited:
**EP-A-0 180 917**
**DE-A-2 824 401**
**FR-A-1 337 864**
**US-A-4 395 884**

**PATENT ABSTRACTS OF JAPAN, vol. 9, no. 290
(M-430)2013r, 16th November 1985; & JP - A - 60
128 931 (MAZDA) 10-07-1985**

**PATENT ABSTRACTS OF JAPAN, vol. 7, no. 95
(M-209)1240r, 21th April 1983; & JP - A - 58
18522 (HITACHI SEISAKUSHO) 03-02-1983**

(73) Proprietor: **Mazda Motor Corporation
No. 3-1, Shinchi Fuchu-cho
Aki-gun Hiroshima-ken (JP)**

(72) Inventor: **Tadokoro, Tomoo
No. 17-20 Horikoshi 3-chome Minami-ku
Hiroshima-Shi Hiroshima-ken (JP)**
Inventor: **Matsuda, Ikuo
No. 21-15, Yanagigaoka Fuchu-cho
Aki-gun Hiroshima-ken (JP)**

(74) Representative: **Brunner, Michael John et al
GILL JENNINGS & EVERY 53-64 Chancery Lane
London WC2A 1HN (GB)**

Courier Press, Leamington Spa, England.

## Description

The present invention relates to a turbo-supercharger for an internal combustion engine, and more particularly to a turbo-supercharger having an exhaust turbine provided with a plurality of exhaust gas inlet passages and valve means for closing one or more of the exhaust gas inlet passages so that the effective exhaust gas inlet passage area can be changed in accordance with the engine operating conditions.

Conventional turbo-superchargers for internal combustion engines include on exhaust gas turbine having a turbine casing provided with a single exhaust gas inlet passage leading to a turbine chamber where the turbine rotor is located. Since the turbine efficiency is governed by an A/R ratio wherein A is the area of the exhaust gas passage in. the turbine casing and R is the radius of the turbine casing scroll, the conventional design has been such that the A/R ratio is determined so that the highest turbine efficiency can be accomplished under a medium speed engine operation. It has been considered that, with this design, a relatively high efficiency can be obtained throughout the engine operating range.

It should however be noted that, under the conventional design wherein the A/R ratio is determined so that the best result is obtained in the medium speed engine operating range, the quantity of the exhaust gas is beyond an optimum value under a high speed range so that there will be an increase in the flow resistance and a consequent increase in the back pressure at the engine exhaust ports. The increase in the flow resistance disturbs an effective utilization of the energy in the exhaust gas so that the turbine efficiency is decreased. The increase in the back pressure causes a poor combustion efficiency so that a sufficient engine output cannot be obtained.

Further, under a low speed engine operation, the quantity of the exhaust gas is lower than an optimum value so that the exhaust gas flow is decreased. As the result, the exhaust gas cannot drive the turbine rotor with a sufficiently high speed so that the turbine efficiency is undesirably decreased.

In order to overcome the disadvantages of the conventional turbo-supercharger, it has been proposed to separate the exhaust gas inlet passage in the turbine casing into a plurality of passage sections and close one or more of the passage sections under a low speed engine operation by means of an appropriately provided valve mechanism. For example, in the Japanese patent application 56-116426 filed on July 27, 1981 and published for public inspection on February 3, 1983 under the disclosure number 58-18522, there is disclosed a turbo-supercharger including a turbine casing in which the turbine scroll defining the exhaust gas inlet passage is formed with a radial partition wall which divides the exhaust gas inlet passage into two parallel inlet passage sections. The first one of the inlet passage sections is opened at the inlet end of the turbine casing so as to be connected with the exhaust passage of the engine. The second inlet passage section has an inlet end connected with the first passage section through a communication port formed in the partition wall to open to an intermediate portion of the first passage section. The turbine casing carries a valve which closes the communication port under a low speed engine operation so that the exhaust gas is passed only through the first passage section to the turbine chamber where the turbine rotor is located.

The proposed turbo-supercharger is considered as being advantageous in that the effective area of the exhaust gas inlet passage can be changed in accordance with the engine speed so that a turbine efficiency can be obtained under a wide engine speed range. It should however be noted that the proposed arrangement has disadvantages due to the fact that the communication port is formed in the partition wall separating the two passage sections. One of such disadvantages is that, under a high speed operating range, a part of the exhaust gas flows into the second passage section from the inlet part of the one passage section through the communication port abruptly changing its direction of flow so that the flow resistance is increased under a high speed range. Further, under a high speed engine operating range, the exhaust gas flow through the communication port has a tendency of flowing in a direction inclined with respect to the axis of the communication port so that the effective area of the port is decreased and the flow resistance is increased. The problem may be solved by increasing the diameter of the communication port. However, this solution causes an increase in the dimensions of the valve mechanism.

Further disadvantages are derived in the proposed arrangement due to the fact that the valve mechanism is provided on the turbine casing. At first, it should be pointed out that complicated thermal deformations are produced in the turbine casing so that it is difficult to maintain a satisfactory seal between the valve member and the valve seat which is formed in the turbine casing. It is further difficult to provide a space for locating the valve mechanism in the turbine casing.

EP-A-0180917 (on which the preamble to claim 1 is based) discloses an exhaust gas turbine type supercharger wherein a casing of a turbine is divided into two chambers along a flow direction of the exhaust gas, forming an open scroll and a closed scroll. The turbine is fed with exhaust gas over a full operational range of the engine by the open scroll whilst the closed scroll may be opened to increase a flow rate of the exhaust gas to the turbine. A port is formed between the open scroll and a downstream exhaust gas passage of the turbine, with an opening/closing valve interposed thereat, to allow exhaust gas to bypass the turbine when the supercharged pressure becomes high.

US-A-4395884 discloses a turbo-supercharger for an engine, comprising a supercharging compressor located in an intake system of the engine and an exhaust gas turbine located in an exhaust system of the engine for driving the compressor; the turbine including a turbine casing and a turbine rotor rotatably supported in the turbine casing; the exhaust system of the engine having exhaust pipe means defining an exhaust passage and connected with the turbine casing; the turbine casing having exhaust gas inlet passage means for directing exhaust gas of the engine from the exhaust passage to the turbine rotor, the inlet passage means including at least a first inlet passage and a second inlet passage which are located in a side-by-side relationship with each other, the first and second inlet passages opening to the exhaust passage through first and second inlet ports which are oriented in the direction of exhaust gas flow in the exhaust passage, and valve means for closing the second inlet passage, the valve means including a valve member adapted to close the second inlet port and swingable arm means for supporting the valve member swingably on the exhaust pipe means. Such a turbo-supercharger is hereinafter referred to as of the kind described. However, in US-A-4395884 the valve member merely rotates about its longitudinal axis in order to allow exhaust gas to flow through the second inlet passage, thus still providing resistance to the flow of exhaust gas through the second inlet passage and increasing the turbulence therein.

Another turbo-supercharger for an engine, and having the features found in the preamble to claim 1, is disclosed in FR-A-1337864.

According to the present invention, a turbo-supercharger of the kind described in the preamble to claim 1, is characterised in that the valve member is connected with the swingable arm means through a floating connection which allows relative movement between the valve member and the swingable arm means; and that the valve member is formed with at least one through-hole, the swingable arm means having means for closing the through hole in the closed position and opening the through hole when the swingable arm means is moved in the direction of opening the valve means.

According to the features of the present invention, the first and second inlet ports are oriented in a direction opposing to the exhaust gas flow in the exhaust passage so that the exhaust gas flow can be drawn into both the first and second inlet passages without changing the direction of the flow. It is therefore possible to decrease the flow resistance. Since the valve means is mounted on the exhaust pipe, the turbine casing can be of a simple configuration so that complicated thermal deformations are avoided. By mounting the valve member so that it is located in the open position substantially in the bulged portion of the exhaust pipe, the exhaust gas flow is not disturbed by the valve member in the open position.

The invention will now be described with reference to a specific embodiment taking reference to the accompanying drawings, in which:

Figure 1 is a front view of a turbo-supercharger in accordance with one embodiment of the present invention;

Figure 2 is a sectional view taken substantially along the line II-II in Figure 1;

Figure 3 is a side view as seen in the direction of the arrow III-III in Figure 1;

Figure 4 is a sectional view taken along the line IV-IV in Figure 3;

Figure 5 is a sectional view taken along the line V-V in Figure 4;

Figure 6 is a sectional view taken along the line VI-VI in Figure 5;

Figure 7 is a sectional view similar to Figure 6 but showing an operation of the valve mechanism;

Figure 8 is a sectional view showing a modified type of the valve mechanism; and,

Figure 9 is a sectional view showing an operation of the valve mechanism shown in Figure 8.

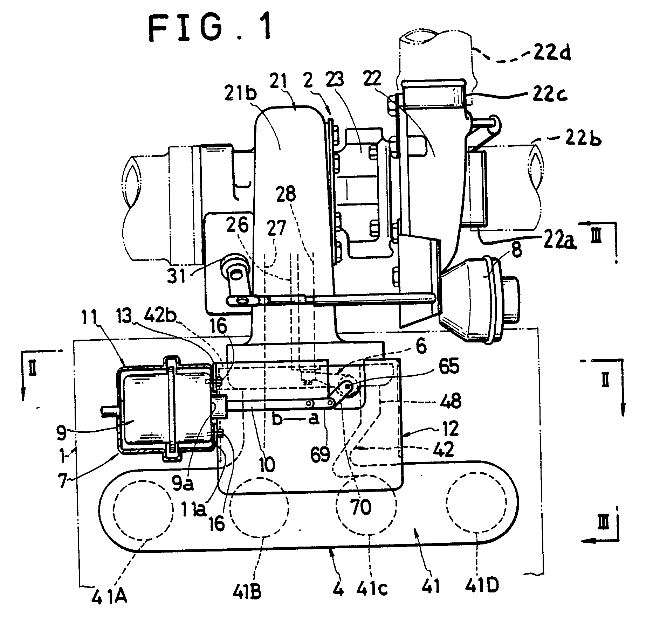

Referring now to the drawings, particularly to Figure 1 through 3, there is shown an engine 1 having an exhaust pipe 4 and a turbo-supercharger 2 attached to the exhaust pipe 4 through a gasket 3. As shown in Figure 1, the turbo-supercharger 2 includes a turbine casing 21 and a compressor casing 22 which are connected together by a center casing 23. The compressor casing 22 has an inlet 22a connected with an upstream intake pipe element 22b and an outlet 22c connected with a downstream intake pipe element 22d. The intake pipe elements 22b and 22d together form an intake system for the engine 1. Although not shown in the drawings, a compressor rotor is disposed in the compressor casing 22.

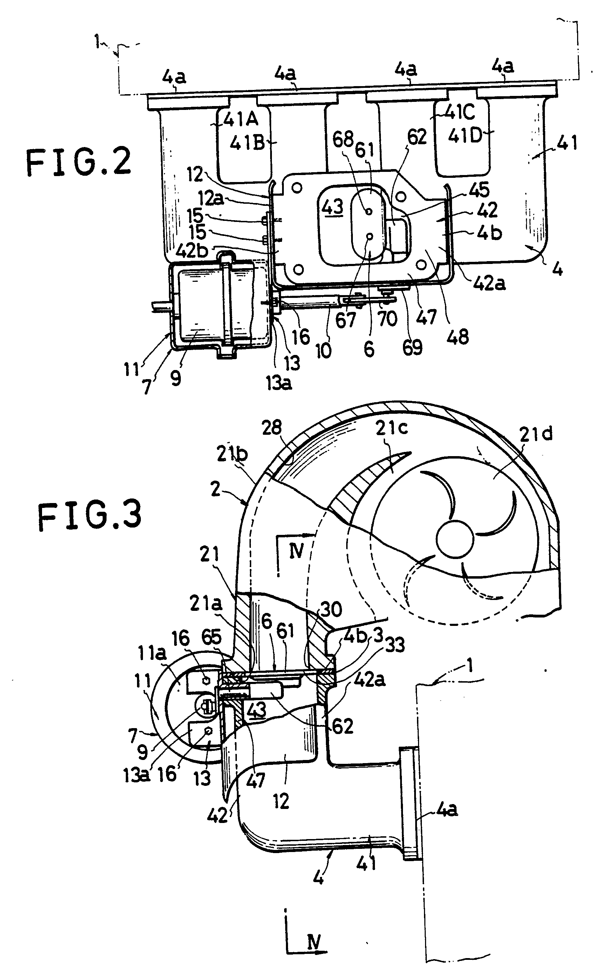

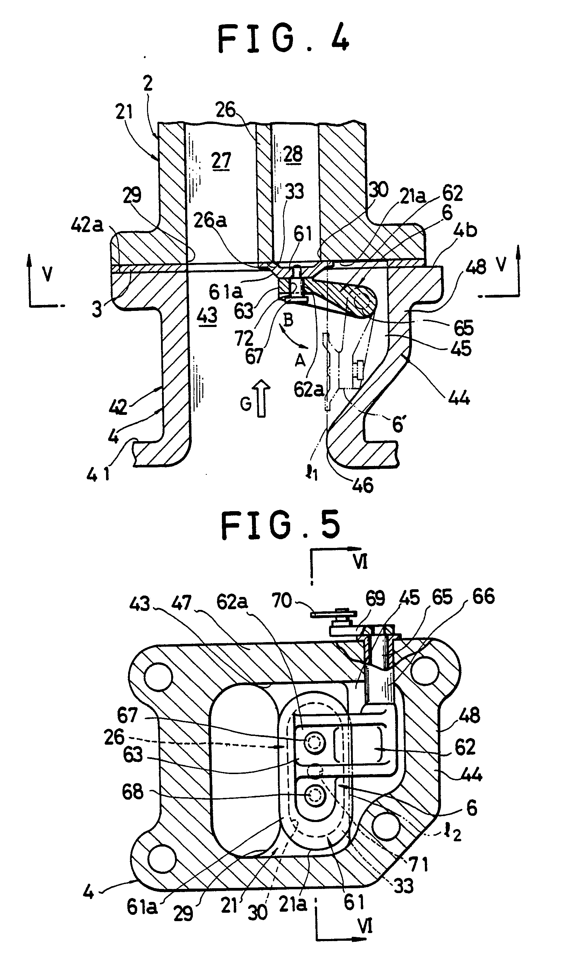

Referring to Figure 2, it will be noted that the exhaust pipe 4 includes a branch pipe section 41 having branch pipe portions 41A, 41B, 41C and 41D which have inlet end surfaces 4a connected with inlet ports of individual cylinders of the engine 1. The branch pipe portions 41A, 41B, 41C and 41D are connected with a manifold section 42 having an outlet pipe portion 42a. The outlet pipe portion 42a terminates at a planar outlet end surface 4b. The turbine casing 21 has a planar inlet and surface 21a which is attached to the exhaust pipe 4 at the outlet end surface 4b of the outlet pipe portion 42a as shown in Figure 3. The turbine casing 21 has a scroll section 21b in which a rotor chamber 21c is defined. In the rotor chamber 21c, there is a turbine rotor 21d which is connected with the compressor rotor in the compressor casing 22.

In order to lead the engine exhaust gas from the exhaust pipe 4 to the turbine chamber 21c in the turbine casing 21, the turbine casing 21 is formed with a first exhaust gas inlet passage 27 and a second exhaust gas inlet passage 28 which are located in a side-by-side relationship as shown in Figure 4 with a partition wall 26 located therebetween. As shown in Figures 4 and 5, the inlet passages 27 and 28 open to the inlet end surface 21a of the turbine casing 21 respectively through inlet Ports 29 and 30. It will be noted in Figure 4 that the inlet ports 29 and 30 are oriented in a direction opposing the exhaust gas flow G from the outlet pipe portion 42 of the exhaust pipe 4. It will further be noted in Figure 5 that the inlet ports 29 and 30 are of oval configurations each having a minor axis and a major axis and aligned with each other in the direction of the minor axis. As shown, the port 29 is larger than the port 30.

A valve mechanism 6 is provided for closing the inlet port 30. Referring to Figures 4 through 7, it will be noted that the valve mechanism 6 includes a valve member 61 which is adapted to seat on valve seat 33 defined around the periphery of the inlet port 30 on the inlet end surface 21a of the turbine casing 21. The outlet pipe portion 42 of the exhaust pipe 4 has an exhaust gas outlet passage 43 which has an area sufficient to cover the inlet ports 29 and 30 of the exhaust gas inlet passages 27 and 28, respectively. The outlet pipe portion 42 is further formed at a side adjacent to the inlet port 28 with a sidewardly bulged portion 44 which defines a valve receiving space 45. The outlet pipe portion 42 has a side wall 47 which is located at a far side from the engine 1 and provided with a bearing sleeve 66 extending through the wall 47 into the space 45.

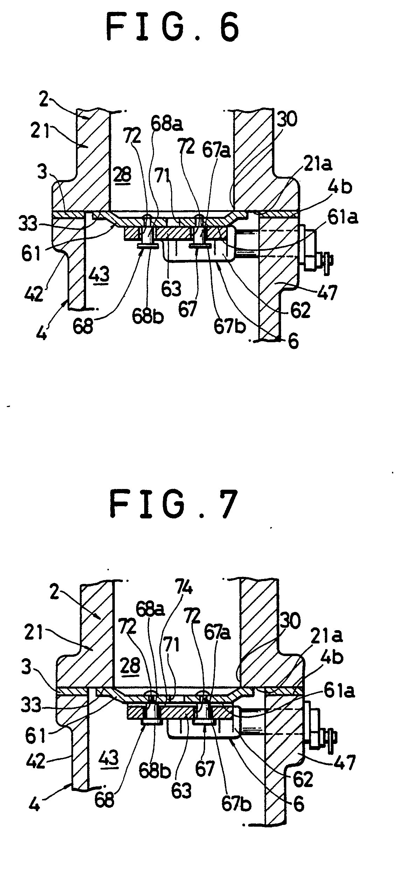

The bearing sleeve 66 rotatably supports a shaft 65 which is integral with a valve actuating arm 62 located in the space 45. The arm 62 has a free end 62a formed with a valve depressing plate 63 to which the valve member 61 is connected by means of a pair of connecting pins 67 and 68 inserted into pin holes 72 in the plate 63. As shown in Figures 6 and 7, the pins 67 and 68 respectively have shanks 67a and 68a and heads 67b and 68b. The shanks 67a and 67b are inserted into the pin holes 72 with clearances in radial and axial directions so that the valve member 61 is connected with the valve depressing plate 63 with play. Therefore, the valve member 61 can move with respect to the plate 63 in the direction of the axes of the pins 67 and 68 and in the direction parallel to the plate 63. It will be noted in Figures 5 through 7, the valve member 61 is formed at the center thereof with a vent hole 71. When the arm 62 is actuated to force the valve member 61 against the valve seat 33, the vent hole 71 is closed by the valve depressing plate 63 so that the valve member 61 completely closes the inlet port 30 as shown in Figure 6. At this position, the ram pressure of the exhaust gas flow in the passage 43 is applied to the outer surface 61a of the valve member 61 and functions to maintain the valve member 61 in the closed position. When it is desired to open the valve, the arm 62 is actuated so that the valve depressing plate 63 is moved away from the valve seat 33. At an initial period of the movement of the arm 62, the plate 63 is moved apart from the valve member 61 as shown in Figure 7 since the valve member 61 is forced toward the valve seat 33 under the pressure of the exhaust gas. The movement of the plate 63 produces a clearance 74 between the valve member 61 and the plate 63 so that the vent hole 71 is opened to relieve the exhaust gas pressure. This is effective to weaken the pressure difference across the valve member 61 so that the valve member 61 can readily be detached from the valve seat 33. It should further be noted that, in the position shown in Figure 7, the pin holes 72 are closed by the heads 67b and 68b of the pins 67 and 68 so that the exhaust gas is prevented from flowing through the holes 72. This arrangement is effective to prevent deterioration of the walls of the pin holes 72 under the heat of the exhaust gas.

As shown in Figures 4 and 5, the valve member 61 totally covers the end surface of the partition wall 26 in the closed position. This arrangement is effective to suppress influences of heat on the partition wall 26. By covering the end surface of the partition wall 26 with the valve member 61, it is possible to prevent the end surface of the partition wall 26 from being directly exposed to the heat of the exhaust gas so that the temperature increase in partition wall 26 can be suppressed. It is therefore possible to avoid or at least decrease occurence of cracks due to thermal stresses.

It is preferable to make the configuration of the inlet port 30 and also the configuration of the valve member 61 oval because such configuration makes it possible to decrease the length of the valve actuating arm 62 by arranging the axis of the swinging movement of the arm 62 in parallel with the major axis of the oval. It is therefore possible to decrease the torque required for actuating the valve member 61. In case where the valve member 61 is of an elliptical configuration as in the illustrated embodiment, it is also preferable to connect the valve member 61 to the valve actuating arm 62 by means of a pair of pins as shown so that the orientation of the valve member 61 can be maintained.

The floating connection between the valve member 61 and the valve depressing plate 63 on the valve actuating arm 62 provides a further advantage. It will be possible that the valve seat 33 be deformed, or worn through prolonged use, or carbon deposits may be formed on the valve seat 33. These phenomena will apparently disturb a proper seating of the valve member 61 on the valve seat 33. However, according to the floating connection, the valve member 61 can follow such irregularities on the valve seat 33 to a certain degree, so that it is possible to prevent the valve member 61 from being lifted as a whole from the valve seat 33.

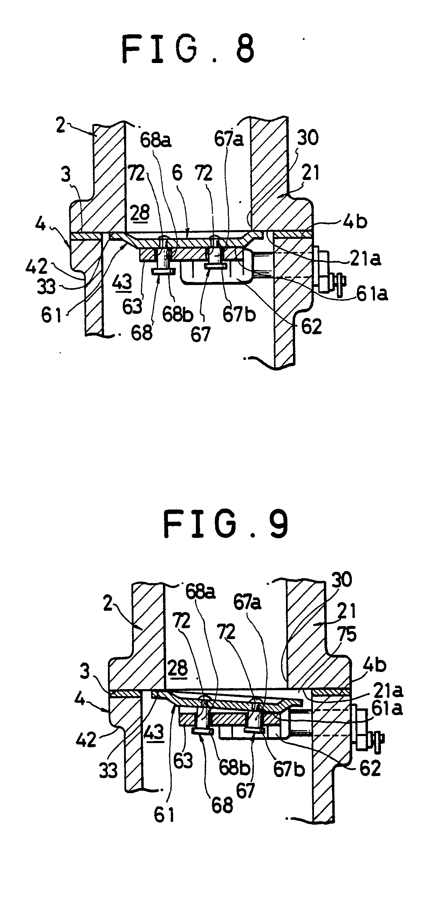

Figures 8 and 9 show a modification of the valve mechanism. In this arrangement, the pins 67 and 68 connecting the valve member 61 to the valve depressing plate 63 on the valve actuating arm 62 have different lengths. More specifically, the pin 67 is shorter than the pin 68. The valve member 61 has no vent hole. In this arrangement, when the valve is to be opened, the plate 63 is engaged at first with the head 67b of the pin 67 so that the valve member 61 is lifted at first at the side adjacent to the pin 67 as shown in Figure 9.

Referring back to Figures 4 and 5, the valve actuating shaft 65 extends into the space 45 defined by the bulged portion 44 in the outlet portion 42 of the exhaust pipe 4. The valve actuating arm 62 integral with or secured to the shaft 65 is substantially located in the space 45. In the closed position, the valve member 61 and the free end portion of the arm 62 are placed in the exhaust passage 43 as shown by solid lines in Figure 4. However, in the open position, the valve actuating arm 62 is completely received in the space 45. defined by the bulged portion 44. Further, the valve member 61 is substantially located in the space 45 as shown by phantom lines although a part of the valve member 61 is projected into the passage 43. This arrangement provides an advantage in that the valve mechanism does not produce a resistance against the exhaust gas flow G in the passage 43 in the open position of the valve mechanism. Further, since the valve mechanism is carried by the exhaust pipe 4, it is possible to make the structure of the turbine casing 21 simple as compared with the structure wherein the valve mechanism is provided in the turbine casing 21.

In order to actuate the valve mechanism, there is provided a valve actuating device 7 including a pneumatic actuator 9 which may be of a diaphragm type. The actuator 9 is supplied with an air or other gas pressure which is dependent on the engine operating condition. The actuator 9 is mounted on the outlet pipe portion 42 of the exhaust pipe 4 at a side opposite to the engine 1 as shown in Figures 2 and 3. For the purpose, a heat insulator 12 is attached at a side portion 12a to the outlet pipe portion 42 by means of bolts 15. A bracket plate 13 is also attached to the insulator 12 by the aforementioned bolts 15. The bracket plate 13 has an end portion 13a projecting from the insulator 12 and a heat insulator 11 enclosing the actuator 9 is attached by means of bolts 16 to the end portion 13a of the bracket plate 13.

The actuator 9 has an actuating rod 10 which is connected with one end of a link 70. The other end of the link 70 is connected to an arm 69 which is secured to the valve actuating shaft 65. It will therefore be understood that the arm 62 and the valve member 61 are moved by the actuator 9 between the open and closed positions as shown by arrows A and B in Figure 4 in accordance with the engine operating conditions. For example, the actuator 9 may be operated so that the valve is closed under a low speed engine operation and opened under a high speed engine operation.

## Claims

1. A turbo-supercharger for an engine, comprising a supercharging compressor (22) located in an intake system of the engine and an exhaust gas turbine (21) located in an exhaust system of the engine for driving the compressor; the turbine including a turbine casing (21) and a turbine rotor (21d) rotatably supported in the turbine casing; the exhaust system of the engine having an exhaust pipe (41) defining an exhaust passage (43) and connected with the turbine casing; the turbine casing having exhaust gas inlet passage means (27,28) for directing exhaust gas of the engine from the exhaust passage to the turbine rotor, the inlet passage means including at least a first inlet passage (27) and a second inlet passage (28) which are located in a side-by-side relationship with each other, the first (27) and second (28) inlet passages opening to the exhaust passage (43) through first and second inlet ports (29,30) which are oriented in the direction of exhaust gas flow in the exhaust passage, and valve means (6) for closing the second inlet passage (28), the valve means (6) including a valve member (61) adapted to close the second inlet port and swingable arm means (62) for supporting the valve member swingably on the exhaust pipe (41), the exhaust pipe (41) being formed adjacent to the turbine casing with an outwardly bulged recess (44) and the valve member (61) being located substantially in the recess (44) when it is in an open position, characterized in that the valve member (61) is connected with the swingable arm means (62) through a floating connection (63,68,68a) which allows relative movement between the valve member (61) and the swingable arm means (62); and that the valve member (61) is formed with at least one through-hole (71), the swingable arm means (62) having means (63) for closing the through hole in the closed position and opening the through hole when the swingable arm means is moved in the direction of opening the valve means.

2. A turbo-supercharger in accordance with claim 1 in which the exhaust pipe (41) is of a cross-sectional configuration which covers both the first (29) and second (30) inlet ports.

3. A turbo-supercharger in accordance with claim 1 or claim 2, in which each of the first (29) and second (30) inlet ports is of an oval configuration having a minor axis and a major axis, the first and second inlet ports being aligned in the direction of the minor axis.

4. A turbo-supercharger in accordance with claim 3, in which the swingable arm means (62) of the valve means (6) has a swinging axis which is substantially parallel with the major axes of the oval of the inlet ports.

5. A turbo-supercharger in accordance with any of claims 1 to 4, in which the turbine casing (21) has an inlet end surface (21a) which is mated with an outlet end surface (4b) of the exhaust pipe (41) the first (29) and second (30) inlet ports being opened at the inlet end surface (21a), the valve member (61) of the valve means (6) being adapted to be seated on a valve seat (33) defined on the inlet end surface around the second inlet port (30).

6. A turbo-supercharger in accordance with any of claims 1 to 5, in which the swingable arm means (63) of the valve means (6) has a swinging axis located in the bulged portion (44) of the exhaust pipe (41).

7. A turbo-supercharger in accordance with any of claims 1 to 6, which further includes valve actuator means (7) for actuating the valve means (6) between the open and closed positions, the actuator means being mounted on the exhaust pipe (41).

8. A turbo-supercharger in accordance with any of claims 1 to 7, in which the valve member (61) is connected with the swingable arm means by means of a pair of pins (67,68).

9. A turbo-supercharger in accordance with claim 8, in which the pins (67b,68b) have different lengths.

10. A turbo-supercharger in accordance with any of claims 1 to 9, in which, in its closed position, the valve member (61) of the valve means (6) substantially covers an inlet end surface of a partition wall (26) provided in the turbine casing between the inlet and outlet parts.

11. A turbo-supercharger in accordance with claim 1 in which said first and second inlet ports (29;30) are provided in portions of a cross-section of the exhaust pipe where no bulged portion is provided, said swingable arm means (62) being provided in said bulged portion (44).

12. A turbo-supercharger in accordance with claim 1 in which said sidewardly bulged portion (44) is of a configuration which corresponds to the configuration of the value member in the open position, said bulged portion being gradually enlarged toward an end connected with the turbine casing.

**Patentansprüche**

1. Turbolader für eine Brennkraftmaschine mit einem Ladekompressor (22) in einem Ansaugsystem der Brennkraftmaschine und einer Abgasturbine (2) für den Antrieb des Kompressors in einem Auspuffsystem der Brennkraftmaschine, wobei die Turbine ein Turbinengehäuse (21) und einen in dem Turbinengehäuse drehbar angeordneten Turbinenläufer (21d) aufweist, das Auspuffsystem der Brennkraftmaschine ein einen Abgasdurchlaß (43) bildendes und mit dem Turbinengehäuse verbundenes Auspuffrohr (41) aufweist, das Turbinengehäuse eine Abgaseinlaßeinrichtung (27,28) zum Zuleiten von Auspuffgas der Brennkraftmaschine aus dem Abgasdurchlaß auf den Turbinenläufer aufweist, welche Abgaseinlaßeinrichtung mindestens einen ersten Einlaßkanal (27) und einen zweiten Einlaßkanal (28) umfaßt, die nebeneinanderliegend angeordnet sind und welcher erste (27) und zweite (28). Einlaßkanal in den Abgasdurchlaß (43) mit einer ersten und zweiten Einlaßöffnung (29,30) münden, welche in Richtung des Abgasstroms in dem Abgasdurchlaß ausgerichtet sind, sowie eine Ventilanordnung (6) zum Verschließen des zweiten Einlaßkanals (28) aufweist, wobei die Ventilanordnung (6) ein Ventilelement (61) zum Verschließen der zweiten Einlaßöffnung und eine Schwenkarmanordnung (62) umfaßt, die das Ventilelement verschwenkbar an dem Auspuffrohr (41) abstützt, welches Auspuffrohr (41) angrenzend an das Turbinengehäuse eine nach außen gewölbte Eintiefung (44) aufweist und welches Ventilelement (61) in seiner Offenstellung im wesentlichen von der Eintiefung aufgenommen wird, dadurch gekennzeichnet, daß das Ventilelement (61) mit der Schwenkarmanordnung (62) durch eine lokkere Verbindung (63,68,68a) verbunden ist, die eine Bewegung des Ventilelements (61) gegenüber der Schwenkarmanordnung (62) erlaubt, und daß das Ventilelement (61) mindestens ein Durchgangsloch (71) aufweist, während die Schwenkarmanordnung (62) versehen ist mit einer Einrichtung (63) zum Verschließen des Durchgangslochs in der Schließstellung und zum Öffnen des Durchgangslochs, wenn die Schwenkarmanordnung in der zum Öffnen der Ventilanordnung führenden Richtung bewegt wird.

2. Turbolader nach Anspruch 1, bei welchem das Auspuffrohr (41) eine Querschnittsform hat, die sowohl die erste (29) als auch die zweite Einlaßöffnung (30) überdeckt.

3. Turbolader nach Anspruch 1 oder 2, bei welchem die erste (29) und die zweite Einlaßöffnung (30) ovale Gestalt mit einer kleinen und einer großen Achse haben, wobei die erste und die zweite Einlaßöffnung in Richtung der kleinen Achse fluchten.

4. Turbolader nach Anspruch 3, bei welchem die Schwenkarmanordnung (62) der Ventilanordnung (6) eine Schwenkachse besitzt, die praktisch parallel zu den größeren Achsen des Ovals der Einlaßöffnungen verläuft.

5. Turbolader nach einem der Ansprüche 1 bis 4, bei welchem das Turbinengehäuse (21) eine Einlaßendfläche (21a) aufweist, die auf eine Auslaßendfläche (4b) des Auspuffrohrs (41) paßt, wobei die erste (29) und die zweite Einlaßöffnung (30) an der Einlaßendfläche (21a) offen sind und das Ventilelement (61) der Ventilanordnung (6) sich auf einen Ventilsitz (33) legen kann, der an der Einlaßendfläche um die zweite Einlaßöffnung (30) herum ausgebildet ist.

6. Turbolader nach einem der Ansprüche 1 bis 5, bei welchem die Schwenkarmanordnung (62) der Ventilanordnung (6) eine Schwenkachse im Inneren des nach außen gewölbten Teils (44) des Auspuffrohrs (41) aufweist.

7. Turbolader nach einem der Ansprüche 1 bis 6, bei welchem außerdem eine an dem Auspuffrohr (41) angeordnete Ventilbetätigungseinrichtung (7) zum Verstellen der Ventilanordnung (6) aus der Offenstellung in die Schließstellung und umgekehrt vorgesehen ist.

8. Turbolader nach einem der Ansprüche 1 bis 7, bei welchem das Ventilelement (61) mit der Schwenkarmanordnung durch ein Bolzenpaar (67,68) verbunden ist.

9. Turbolader nach Anspruch 8, bei welchem die Bolzen (67b,68b) unterschiedlich lang sind.

10. Turbolader nach einem der Ansprüche 1 bis 9, bei welchem das Ventilelement (61) der Ventilanordnung (6) in seiner Schließstellung eine Einlaßendfläche einer in dem Turbinengehäuse zwischen dem Einla- ßund dem Auslaßteil vorgesehene Zwischenwand (26) im wesentlichen bedeckt.

11. Turbolader nach Anspruch 1, bei welchem die genannte erste und zweite Einlaßöffnung (29;30) sich in Abschnitten eines Querschnitts des Auspuffrohrs befinden, wo kein gewölbter Abschnitt vorgesehen ist, während die genannte Schwenkarmanordnung (62) in dem genannten gewölbten Abschnitt ausgebildet ist.

12. Turbolader nach Anspruch 1, bei welchem der genannte seitwärts ausgewölbte Abschnitt (44) in seiner Gestalt der Form des Ventilelements (61) in dessen Offenstellung entspricht, wobei der genannte gewölbte Abschnitt zu einem an das Turbinengehäuse anschließenden Ende hin allmählich erweitert ist.

**Revendications**

1. Turbocompresseur de suralimentation destiné à un moteur, comprenant un compresseur de suralimentation (22) placé dans un circuit d'admission du moteur et une turbine (21) entraînée par des gaz d'échappement, placée dans un circuit d'échappement du moteur afin qu'elle entraîne le compresseur, la turbine comprenant un carter (21) ou un rotor (21d) de turbine, ce dernier étant supporté de manière qu'il puisse tourner dans le carter, le circuit d'échappement du moteur ayant une tubulure d'échappement (41) qui délimite un passage d'échappement (43) et qui est connectée au carter de la turbine, le carter de la turbine ayant un dispositif (27, 28) à passage d'entrée de gaz d'échappement destiné à diriger les gaz d'échappement du moteur du passage d'échappement au rotor de la turbine, le dispositif à passage d'entrée comprenant au moins un premier passage d'entrée (27) et un second passage d'entrée (28) qui sont montés côte à côte, le premier (27) et le second (28) passage d'entrée débouchant dans le passage d'échappement (43) par un premier et un second orifice d'entrée (29, 30) qui sont orientés dans la direction d'écoulement des gaz d'échappement dans le passage d'échappement, et une soupape (6) destinée à fermer le second passage d'entrée (28), la soupape (6) comportant un obturateur (61) destiné à fermer le second orifice d'entrée et un bras pivotant (62) destiné à supporter l'obturateur afin qu'il puisse pivoter par rapport à la tubulure d'échappement (41), la tubulure d'échappement (41) ayant, près du carter de la turbine, une cavité (44) correspondant à un bombement vers l'extérieur et l'obturateur (61) étant pratiquement logé dans la cavité (44) lorsqu'il est dans sa position d'ouverture, caractérisé en ce que l'obturateur (61) est connecté au bras pivotant (62) par une connexion flottante (63, 68; 68a) qui permet un déplacement relatif de l'obturateur (61) et du bras pivotant (62), et en ce que l'obturateur (61) a au moins un trou débouchant (71), le bras pivotant (62) ayant un dispositif (63) de fermeture du trou débouchant dans la position de fermeture et d'ouverture du trou débouchant lorsque le bras pivotant est déplacé dans le sens d'ouverture de la soupape.

2. Turbocompresseur de suralimentation selon la revendication 1, dans lequel la tubulure d'échappement (41) a, en coupe, une configuration qui recouvre à la fois le premier (29) et le second (30) orifice d'entrée.

3. Turbocompresseur de suralimentation selon la revendication 1 ou 2, dans lequel chacun des premier (29) et second (30) orifices d'entrée a une configuration ovale ayant un petit axe et un grand axe, le premier et le second orifice d'entrée étant alignés dans la direction du petit axe.

4. Turbocompresseur de suralimentation selon la revendication 3, dans lequel le bras pivotant (62) de la soupape (6) a un axe de pivotement qui est sensiblement parallèle aux grands axes des ovales des orifices d'entrée.

5. Turbocompresseur de suralimentation selon l'une quelconque des revendications 1 à 4, dans lequel le carter (21) de turbine a une surface (21a) d'extrémité d'entrée qui est complémentaire d'une surface (4b) d'extrémité de sortie de la tubulure d'échappement (41), le premier et le second orifice d'entrée (29, 30) débouchant à la surface d'extrémité d'entrée (21a), l'obturateur (61) de la soupape (6) étant destiné à s'appliquer contre un siège (33) de soupape délimité dans la surface d'extrémité d'entrée autour du second orifice d'entrée (30).

6. Turbocompresseur de suralimentation selon l'une quelconque des revendications 1 à 5, dans lequel le bras pivotant (63) de la soupape (6) a un axe de pivotement placé dans la partie bombée (44) de la tubulure d'échappement (41).

7. Turbocompresseur de suralimentation selon l'une quelconque des revendications 1 à 6, qui comporte en outre un organe de manoeuvre (7) de la soupape (6) entre des positions d'ouverture et de fermeture, l'organe de manoeuvre étant monté sur la tubulure d'échappement (41).

8. Turbocompresseur de suralimentation selon l'une quelconque des revendications 1 à 7, dans lequel l'obturateur (61) est connecté au bras pivotant par deux goujons (67, 68).

9. Turbocompresseur de suralimentation selon la revendication 8, dans lequel les goujons (67b, 68b) ont des longueurs différentes.

10. Turbocompresseur de suralimentation selon l'une quelconque des revendications 1 à 9, dans lequel, dans sa position de fermeture, l'obturateur (61) de la soupape (6) recouvre pratiquement une surface d'extrémité d'entrée d'une cloison (26) formée dans le carter de la turbine entre les parties d'entrée et de sortie.

11. Turbocompresseur de suralimentation selon la revendication 1, dans lequel le premier et le second orifice d'entrée (29; 30) sont disposés dans des parties de la section de la tubulure d'échappement dans laquelle aucune partie bombée n'est disposée, le bras pivotant (62) étant disposé dans la partie bombée (44).

12. Turbocompresseur de suralimentation selon la revendication 1, dans lequel la partie bombée latéralement (44) a une configuration qui correspond à celle de l'obturateur en position d'ouverture, la partie bombée s'élargissant progressivement vers une extrémité qui est raccordée au carter de la turbine.

# FIG.1

FIG.2

FIG.3

# FIG. 4

# FIG. 5

3

# FIG. 6

# FIG. 7

4

# FIG . 8

# FIG . 9